Europäisches Patentamt

European Patent Office

Office européen des brevets

(11) Publication number: **0 153 189**
**B1**

# (12) EUROPEAN PATENT SPECIFICATION

(45) Date of publication of patent specification: **30.08.89**

(51) Int. Cl.⁴: $G\ 01\ C\ 19/56$

(21) Application number: **85301111.2**

(22) Date of filing: **19.02.85**

(54) Gyroscopic devices.

(30) Priority: **22.02.84 GB 8404668**

(43) Date of publication of application:
**28.08.85 Bulletin 85/35**

(45) Publication of the grant of the patent:
**30.08.89 Bulletin 89/35**

(84) Designated Contracting States:
**DE FR GB SE**

(56) References cited:
**GB-A-2 061 502**
**GB-A-2 111 209**
**US-A-3 182 512**
**645 MARCONI REVIEW, vol. 45, no. 227, 1982,**
**pages 231-249, Rugby, GB; R.M.LANGDON:**
**"The vibrating cylinder gyro"**
**MACHINE DESIGN, vol. 34, no. 24, 11th**
**October 1962, page 12, Penton Inc., Cleveland,**
**US; "Solid-state gyro "Dances the Twist""**

(73) Proprietor: **NATIONAL RESEARCH**
**DEVELOPMENT CORPORATION**
**101 Newington Causeway**
**London SE1 6BU (GB)**

(72) Inventor: **Burdess, James Stonehouse**
**12 Earnshaw Way**
**Whitley Bay Tyne and Wear NE25 9UN (GB)**

(74) Representative: **Stables, Patrick Antony**
**Patent Department National Research**
**Development Corporation 101 Newington**
**Causeway**
**London SE1 6BU (GB)**

Courier Press, Leamington Spa, England.

## Description

This invention relates to gyroscopic devices.

There is an increasing demand for rate gyroscopes — that is to say, gyroscopes that may be used to sense rates of turn — that contain the minimum of moving parts and are therefore potentially simpler, cheaper and more robust than the traditional rate gyroscopes that use rotors and gimbal-type suspensions. An increasing number of rate gyroscope designs have recently made use of the piezo-electric effect in order to cut down the number of moving parts and to do away with rotors. For example, published UK Patent Application No. GB 2111209A describes three designs of one known type of gyroscope making use of this effect. In one of these the piezo-electric effect is used to excite a long beam, held at both ends of its axis Ox, to deflect in one of the planes (the Oxy plane) including that axis: when the beam is subjected to a rate of turn about Ox, the vibration in the Oxy plane gives rise by reason of the Coriolis effect to inertia forces that cause it to vibrate in the Oxz plane, and these vibrations are sensed to give a measure of the rate of turn. In the second example a mushroom-shaped structure comprising a stem and surmounting head formed about axis Oz is excited into a mode of resonant vibration in which the head expands and contracts radially, that is to say in the Oxy plane: when the device is subjected to a rate of turn about Oz, the Coriolis effect results in resonant torsional vibrations of the stem about Oz from which a measure of the applied rate may again be derived. In the third example the sensitive structure is a rectangular plate arranged so that its edges lie parallel to the axes Ox and Oz, and its thickness dimension parallel to Oy: the plate is located by supports attached to the opposite edges that lie parallel to Oz, and is excited so as to execute resonant vibrations in a direction parallel to Oz, and when the plate is subjected to a rate of turn about 0y the Coriolis effect tends to generate vibrations parallel to Ox, giving rise because of the piezo-electric effect to signals from which a measure of the applied rate of turn may once again be derived.

While all three of the constructions just described have the advantage that they lack conventional moving parts, so that the movements essential to the gyroscopic effect are only vibratory movements of anchored structures, nevertheless in each case the vibrations that need to be sensed in order to indicate the applied rate of turn are significantly different from those into which the structure is originally excited. For instance they are directed along a different axis, or are generated in a different part of the total structure.

Another known type of gyroscope which makes use of the piezo-electric effect is described in the article "The Vibrating Cylinder Gyro" on pages 231—249 of 645 Marconi Review, Vol. 45, No. 227, 1982. Figures 3 to 5 in that article illustrate a gyroscope comprising three essential components or members. The first such member is a uniform and hollow cylinder of metal or ceramic, closed at one end and mounted on a pedestal so that the other end is free to vibrate. Second members in the form of piezo-electric input transducers are mounted on the outer wall of the cylinder in an axisymmetric formation, and third members in the form of piezo-electric output transducers are mounted on the same face of the cylinder in an axisymmetric formation similar to but angularly displaced relative to that of the input transducers. When the input transducers are electrically energised they cause a pattern of strain to be generated within the cylinder, and when a rate of turn about its axis is applied to that cylinder a measure of the rate of turn may be derived from the output signals generated by the output transducers.

The present invention arises from appreciating firstly that in the kind of gyroscope described and illustrated in the article just quoted, reliable performance depends upon the maintenance of a very positive bond between the piezo-electric transducers, particularly the input transducers, and the hollow cylinder. Secondly that such a bond is difficult to achieve between the simple and relatively large structure — that is to say, the cylinder — that is to be set into vibration and the much smaller and more sophisticated structures — that is to say, the transducers — that are to generate or respond to the vibration. Thirdly that this problem can be overcome without greatly changing the basic geometry of such a gyroscope, by forming the cylinder of material that exhibits the piezo-electric effect, and by substituting simple input and output electrodes for the input and output transducers. The invention is defined by the claims, the contents of which are to be read as included within the disclosure of this specification, and the invention will now be described, by way of example, with reference to the accompanying diagrammatic drawings in which:—

Figure 1 shows a disc-type structure in plan, and associated electrical components schematically;

Figure 2 shows the disc of Figure 1 in elevation;

Figures 3 to 5 show alternative discs in axial section;

Figure 6 is similar to Figure 1 but shows a cylinder-type structure;

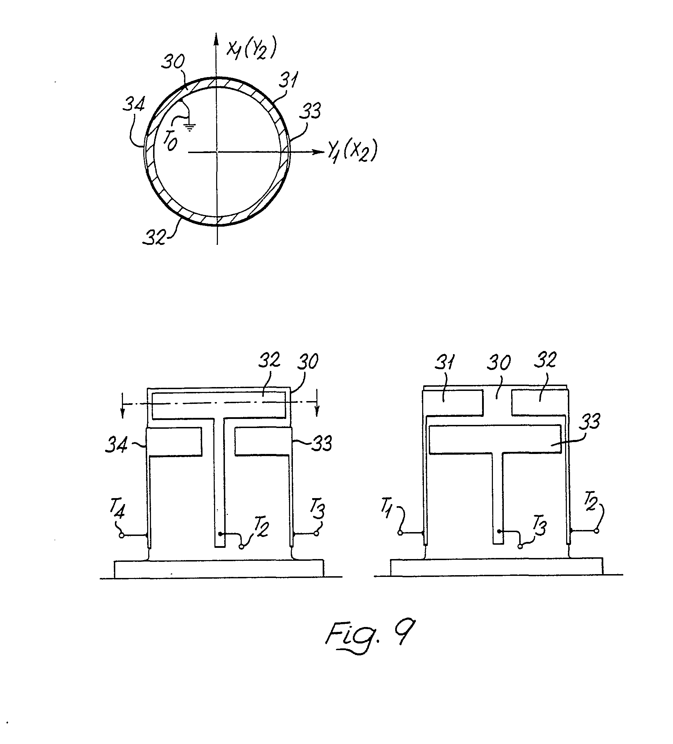

Figure 7 shows the cylinder of Figure 6 partly in section and partly in elevation;

Figure 8 shows an alternative cylinder mounting in elevation; and

Figure 9 comprises three views — transverse section, front elevation and side elevation — of an alternative cylinder.

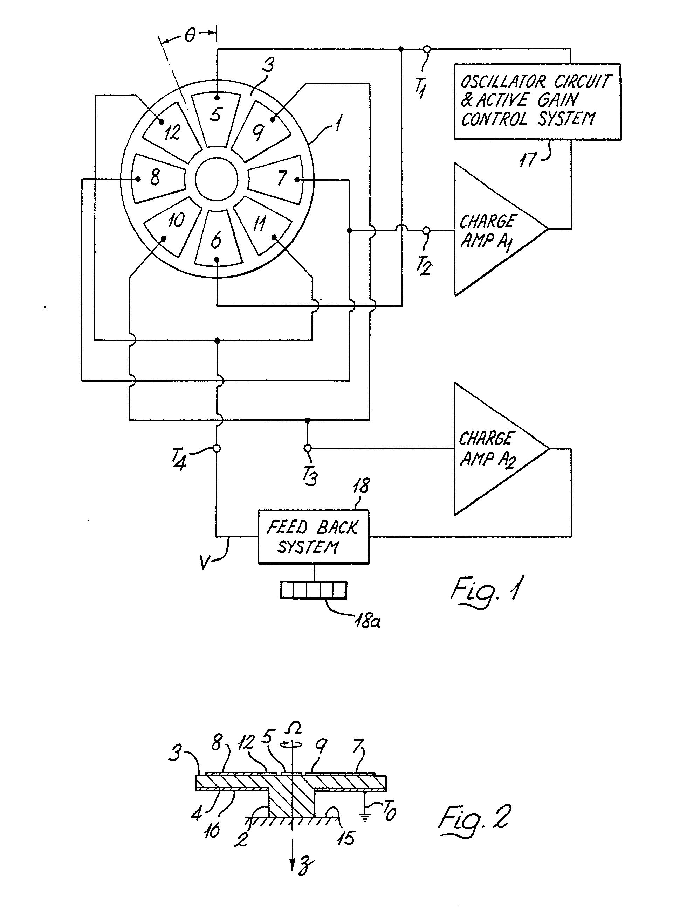

Figure 1 shows a first member in the form of a thin disc 1 made of piezo-electric material — for instance an XY slice of lithium niobate or an axially-polarised slice of lead zirconate titanate (PZT) — supported at the axis by one end of a stem 2 the other end of which is anchored to fixed structure 15. Deposited on the top surface 3 of disc 1 by electro-deposition techniques are eight identical equispaced electrodes 5—12. Of these, electrodes 5 and 6 constitute "second members" as referred to the claims, and electrodes 9 and 10 constitute "third members". Electro-deposition techniques automatically ensure the most accurate possible compliance between the deposited electrode and the surface of the structure on which it is deposited, without the costly machining necessary when as in the prior art the item that is to be bonded to the structure is a preformed piezo-electric transducer which must be shaped to fit. The lower surface 4 of disc 1 constitutes a second axisymmetrically-disposed face of the disc, facing in the opposite direction to top surface 3, and electrode means in the form of a single electrode 16 are deposited on that surface: electrode 16 covers the entire area of that surface, and is held at earth potential by way of terminal $T_0$. The electrodes on top surface 3 are electrically connected in pairs — 5 with 6, 7 with 8, 9 with 10 and 11 with 12 — to form terminals $T_1$, $T_2$, $T_3$ and $T_4$.

An AC voltage applied to terminal $T_1$ from a power source contained within unit 17, which also contains an oscillator circuit with active gain control, will now produce an axial (Oz) electrical field which is confined to the opposite sectors of disc 1 in which electrodes 5 and 6 are deposited. Since the disc material is piezo-electric this field excites the disc into a mode of oscillation in which its shape, when viewed in plan, changes repeatedly between a first ellipse concentric with the original circle, and a second ellipse similar in shape and also concentric but with its major axis lying at right angles to that of the first ellipse. This mode of oscillation results from a volumetric strain (dilatation) $e_1$ which varies around the circumference of the disc according to an expression of the form $e_1 = e_{01}(t) \cos 2\theta$. By using the reciprocal piezo-electric effect a measurement of the rate of change of $e_{01}(t)$ with respect to time ($\dot{e}_{01}$) can be made by recording the voltage generated at the output of amplifier $A_1$ to which terminal $T_2$ is connected.

If the voltage supplied at terminal $T_1$ is now arranged to depend upon the voltage generated by $A_1$ it is well known that disc 1 may be driven as an oscillator in such a manner that $e_{01}$ can be made to vary sinusoidally with time at a frequency corresponding to the natural resonant frequency of the disc, the amplitude of $e_{01}$ being held at a preset value by use of the active gain control of unit 17.

Terminal $T_3$ is also connected to a charge amplifier $A_2$, which is similar to $A_1$, and in the absence of any rate of turn about axis Oz the voltage output of amplifier $A_2$ due to $e_1$ is zero. This is because of the way the dilatation $e_1$ varies with the co-ordinate $\theta$ according to the formula relating $e_1$ and $e_{01}$ already given, and the positioning of electrodes 9 and 10 relative to electrodes 5, 6 and 7, 8. However if disc 1 is rotated about axis Oz with an angular velocity of $\Omega$ rad/sec it may be shown that inertia forces are generated in the disc producing a secondary dilatation $e_2$ which is coaxial with and geometrically similar to the primary dilatation $e_1$ but which is phase-displaced because it obeys the law

$$e_2 = e_{02}(t) \sin 2\theta.$$

This secondary dilatation causes a voltage to be generated at the output of amplifier $A_2$ which is proportional to the rate of change of $e_{02}$ with respect to time. If the voltage applied to terminal $T_4$ is now provided by amplifier $A_2$, by way of a feedback unit 18, it may be shown that the output of amplifier $A_2$ can be maintained at a near-null value and that the voltage (V, as indicated by a display 18a forming part of unit 18) applied to terminal $T_4$ will provide a direct measure of the angular velocity $\Omega$.

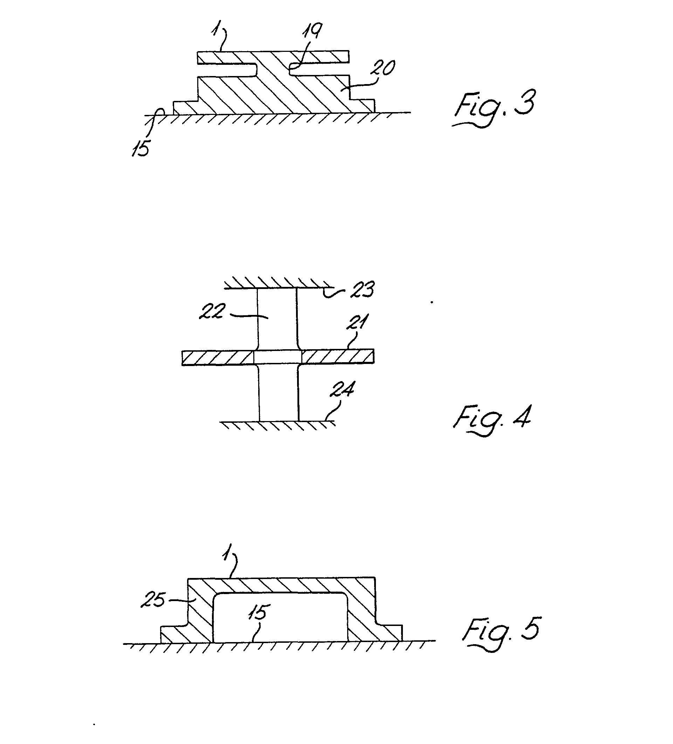

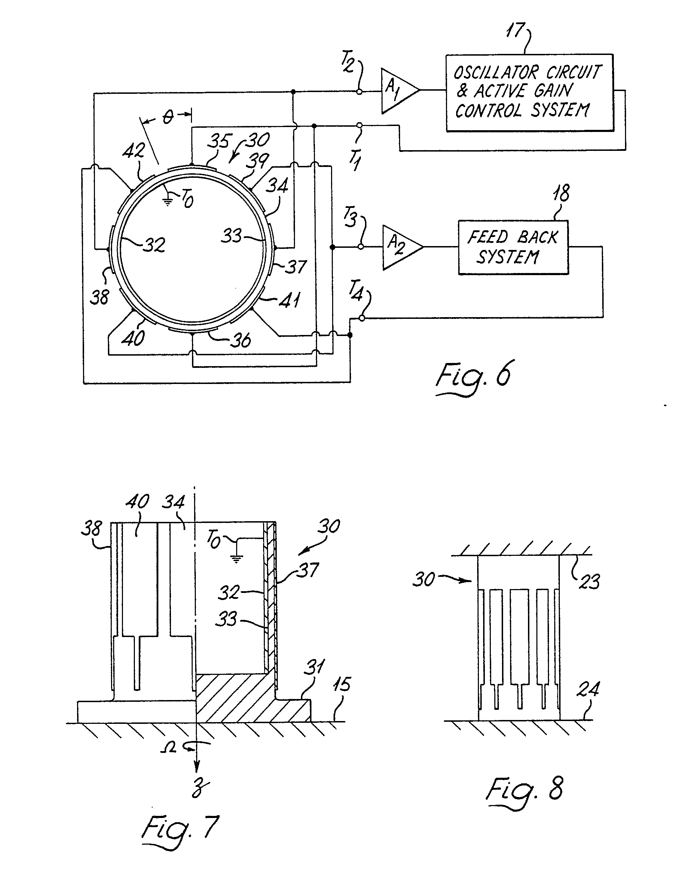

Figures 3 to 5 show variants of the arrangement of disc 1 and stem 2 shown in Figures 1 and 2. In Figure 3 the disc 1 is supported by a very short stem 19 from a raised base 20, in Figure 4 the disc is replaced by an annular sensitive element 21 formed around a column 22 anchored at opposite ends to fixed structures 23 and 24, and in Figure 5 the disc 1 is anchored to supporting structure 15 not by a central stem but by a cylindrical support 25 attached to the periphery of the disc.

Instead of the disc 1, the "first member" of Figure 6 is a thin-walled cylindrical shell 30 made from a radially-polarised hexagonal ceramic piezo-electric material such as PZT. Shell 30 is free from constraint at its upper end but its lower end is fixed to a rigid flange 31 which is in turn anchored to fixed structure 15. As shown, shell 30 and flange 31 are integral, but alternatively they could be separate items bonded or otherwise joined together. A single electrode 32 is deposited on the inner surface 33 of shell 30: it covers the whole of that surface and is maintained at earth potential by way of terminal $T_0$.

Deposited on the outer surface 34 of the shell are eight identical and equispaced electrodes 35—42. Of these, electrodes 35 and 36 constitute "second members" as recited in the claims, and electrodes 39 and 40 constitute "third members". Although these electrodes are not sector-shaped but are rectangular, with their longitudinal edges parallel to the axis Oz of shell 30, their arrangement and function is otherwise very similar to that of electrodes 5—12 in Figure 1 and they are paired 35 with 36, 37 with 38, 39 with 40 and 41 with 42 to form terminals $T_1$, $T_2$, $T_3$ and $T_4$. When a voltage is applied to $T_1$ a radial electrical field (analogous to the axial field of Figure 1) is produced and a strain varying around the circumference of shell 30 is set up which obeys the law $e_1 = e_{01}(t) \cos 2\theta$ as before. Under the influence of this strain the cross-section of the shell repeatedly changes shape between two elliptical extreme positions in a manner analogous to that of the disc-like structures of Figures 1 to 5, the two ellipses being similar in shape but with their major axes at right angles to each other. Rotation of shell 30 about axis Oz with an angular velocity $\Omega$ rad/sec again generates inertia forces producing a secondary strain $e_2$ varying according to the law $e_2 = e_{02}(t)\sin 2\theta$, and once again the feedback unit 18 may operate to maintain the output of amplifier $A_2$ at a near-null value so that the voltage applied to terminal $T_4$ will provide a direct measure of angular velocity $\Omega$.

Figure 8 shows a construction analogous to that of Figure 4, in which the shell 30 carries electrodes disposed as in Figure 6 but is anchored at both ends to fixed structures 23 and 24. Figure 9 shows the different electrode pattern that would be appropriate if the shell 30 were made from say quartz or lithium niobate, rather than PZT. For such materials only four electrodes 31—34 on the outer surface are required but they should be aligned with respect to the crystal axes as shown. Axes $OX_1Y_1$ would apply for quartz, and $OX_2Y_2$ for lithium niobate. Terminals $T_1$ to $T_4$ are connected to their respective amplifiers $A_1$ and $A_2$ and units 17 and 18 as described with reference to previous figures, and the voltage generated at $T_4$ may again provide a direct measure of the angular velocity $\Omega$.

## Claims

1. A gyroscopic device comprising:
a first member (1, 30) presenting an axis (z), having axisymmetric shape and having first (3, 34) and second (4, 33) oppositely-facing faces, and being adapted to be rotated about its axis at a rate of turn;
a plurality of second members (5—6, 35—36), adapted to be electrically energised and mounted diametrically opposite each other on the first face of the first member;
a plurality of third members (9—10, 39—40) mounted on the first face of the first member in an axisymmetric formation similar to but angularly displaced relative to the second members;
means for taking electrical output signals from the third members;
at least one out of the classes of the first, second and third members exhibiting the piezo-electric effect, whereby in co-operation with that effect the electrical energising of the second members generates a pattern of strain resulting in radial vibration in the form of a flexural standing wave within the first member, and when a rate of turn about its axis is applied to the first member the standing wave is angularly displaced so that a measure of that rate of turn may be derived from the output signals from the third members,
characterised in that the first member includes material exhibiting the piezo-electric effect;
the second and third members are electrodes and do not exhibit the piezo-electric effect, and
the second face (4, 33) of the first member is earthed.

2. A gyroscopic device according to Claim 1 in which the first member is a unitary mass of material exhibiting the piezo-electric effect.

3. A gyroscopic device according to Claim 1 in which the third members are mounted at locations coinciding, in the absence of any said applied rate of turn, with nodes of the strain pattern generated by the second members.

4. A gyroscopic device according to Claim 1 in which the first member is a circular disc (1), and the second and third members are mounted together on the same face (3) of the disc.

5. A gyroscopic device according to Claim 1 in which the first member is a hollow cylinder (30) and the second and third members are both mounted on one or other of the inner and outer walls of the cylinder.

6. A gyroscopic device according to Claim 1 in which the first member is anchored to the ground by means of a support (25) connecting the ground to the periphery of the member.

7. A gyroscopic device according to Claim 1 in which the first member is anchored to ground by means of a support (2) connecting the ground to the centre of the member.

8. A gyroscopic device according to Claim 6 or Claim 7 in which ground (23, 24) lies to either side of the first member axially, and separate supports (22) extending away from the first member in opposite axial directions connect it to both of these grounds.

9. A gyroscopic device according to Claim 1 in which the first member consists of sheet-form or laminar material exhibiting the piezo-electric effect.

10. A gyroscopic device according to Claim 1 in which the second and third members are mounted on the first member by electro-deposition.

## Patentansprüche

1. Gyroskopische Vorrichtung umfassend:
ein erstes Glied (1, 30), das eine Achse (Z) und achssymmetrische Form besitzt, mit ersten (3, 34) und zweiten (4, 33) sich gegenüberliegenden Flächen und um seine Achse mit bestimmter Umdrehungsgeschwindigkeit gedreht werden kann;
eine Vielzahl zweiter Glieder (5—6, 35—36), die elektrisch mit Energie gespeist werden können und diametral einander auf der ersten Fläche des ersten Gliedes gegenüberliegend befestigt sind;
eine Vielzahl dritter Glieder (9—10, 39—40), die auf der ersten Fläche des ersten Gliedes in ähnlicher achssymmetrischer Formation wie die zweiten Glieder befestigt sind, jedoch in winkelmäßiger Anordnung relativ dazu;
Mittel zur Aufnahme elektrischer Ausgangssignale der dritten Glieder;
mindestens eines aus den Klassen der ersten, zweiten und dritten Glieder, die den piezoelektrischen Effekt besitzen, wodurch in Zusammenwirkung mit diesem Effekt die elektrische Energiespeisung der zweiten Glieder ein Anspannungsmuster erzeugt, das in radialer Vibration in Form einer stehenden Biegewelle innerhalb des ersten Gliedes resultiert, und wenn eine Umdrehungsgeschwindigkeit um seine Achse auf das erste Glied angelegt wird, wird die stehende Welle winkelmäßig derart versetzt, daß ein Maß dieser Umdrehungsgeschwindigkeit von den Ausgangssignalen der dritten Glieder abgeleitet werden kann,

dadurch gekennzeichnet, daß das erste Glied Material umfaßt, welches den piezoelektrischen Effekt besitzt;

und daß die zweiten und dritten Glieder Elektroden sind, die keinen piezoelektrischen Effekt besitzen, und daß die zweite Fläche (4, 33) des ersten Gliedes geerdet ist.

2. Gyroskopische Vorrichtung nach Anspruch 1, bei der das erste Glied eine einheitliche Materialmasse darstellt, die die piezoelektrische Wirkung ausübt.

3. Gyroskopische Vorrichtung nach Anspruch 1, bei der die dritten Glieder an Stellungen befestigt sind, die bei Fehlen jeglicher angelegter Umdrehungsgeschwindigkeit mit den Knotenpunkten des durch die zweiten Glieder erzeugten Anspannungsmusters zusammenfallen.

4. Gyroskopische Vorrichtung nach Anspruch 1, bei der das erste Glied eine kreisförmige Scheibe (1) darstellt, und bei der die zweiten und dritten Glieder gemeinsam auf der gleichen Fläche (3) der Scheibe befestigt sind.

5. Gyroskopische Vorrichtung nach Anspruch 1, bei der das erste Glied ein Hohlzylinder (30) darstellt, und bei der die zweiten und dritten Glieder beide auf der Innen- oder Außenwandung des Zylinders befestigt sind.

6. Gyroskopische Vorrichtung nach Anspruch 1, bei der das erste Glied am Boden mittels eines Trägers (25) verankert ist, und den Boden mit dem Außenumfang des Gliedes verbindet.

7. Gyroskopische Vorrichtung nach Anspruch 1, bei der das erste Glied am Boden mittels eines Trägers (2) verankert ist und den Boden mit dem Mittelpunkt des Gliedes verbindet.

8. Gyroskopische Vorrichtung nach Anspruch 6 oder 7, bei der der Boden (23, 24) axial auf jeder Seite des ersten Gliedes angeordnet ist, und bei der sich getrennte Träger (22) vom ersten Glied in entgegengesetzten axialen Richtungen erstrekken, und es mit beiden dieser Böden verbinden.

9. Gyroskopische Vorrichtung nach Anspruch 1, bei der das erste Glied aus blattförmigem oder laminarem Material besteht, das den piezoelektrischen Effekt besitzt.

10. Gyroskopische Vorrichtung nach Anspruch 1, bei der die zweiten und dritten Glieder auf dem ersten Glied durch Elektroabscheidung befestigt sind.

**Revendications**

1. Dispositif gyroscopique comprenant:
un premier élément (1, 30) présentant un axe (z), ayant une forme symétrique par rapport à l'axe et ayant une première face (3, 34) et une seconde face (4, 33) mutuellement opposées, et conçu pour tourner à une vitesse de rotation autour de son axe;

une pluralité de seconds éléments (5—6, 35—36) conçu pour être électriquement excités et montés de manière diamétralement opposée les uns par rapport aux autres sur la première face du premier élément;

une pluralité de troisièmes éléments (9—10, 39—40) montés sur la première face du premier élément selon un agencement symétrique par rapport à l'axe semblable à celui des seconds éléments, mais angulairement décalé par rapport à ce dernier;

un moyen pour extraire des signaux électriques de sortie des troisièmes éléments;

au moins une des catégories des premier, seconds et troisièmes éléments présentant l'effet piézo-électrique, grâce à quoi, en coopération avec cet effet, l'excitation électrique des seconds éléments produit un modèle de déformations entraînant des vibrations radiales sous forme d'onde stationnaire à flexion au sein du premier élément, et quand une vitesse de rotation autour de son axe est communiquée au premier élément, l'onde stationnaire est décalée angulairement de façon qu'une mesure de cette vitesse puisse être obtenue à partir des signaux de sortie des troisièmes éléments,

caractérisé en ce que le premier élément comprend une matière présentant l'effet piézo-électrique;

les seconds et troisièmes éléments sont des électrodes et ne présentent pas l'effet piézo-électrique, et

la seconde face (4, 33) du premier élément est reliée à la terre.

2. Dispositif gyroscopique selon la revendication 1, dans lequel le premier élément est une masse unitaire de matière présentant l'effet piézo-électrique.

3. Dispositif gyroscopique selon la revendication 1, dans lequel les troisièmes éléments sont montés à des emplacements coïncidant, en l'absence de toute dite vitesse de rotation communiquée, avec des noeuds du modèle de déformations produits par les seconds éléments.

4. Dispositif gyroscopique selon la revendication 1, dans lequel le premier élément est un disque circulaire (1), et les seconds et troisièmes éléments sont montés tous ensemble sur la même face (3) du disque.

5. Dispositif gyroscopique selon la revendication 1, dans lequel le premièr élément est un cylindre creux (30) et les seconds et troisièmes éléments sont tous montés sur l'une ou l'autre des parois intérieure et extérieure du cylindre.

6. Dispositif gyroscopique selon la revendication 1, dans lequel le premier élément est fixé à la masse à l'aide d'un support (25) reliant la masse au pourtour de l'élément.

7. Dispositif gyroscopique selon la revendication 1, dans lequel le premier élément est fixé à la masse à l'aide d'un support (2) reliant la masse au centre de l'élément.

8. Dispositif gyroscopique selon la revendication 6 ou la revendication 7, dans lequel la masse (23, 24) se trouve axialement de part et d'autre du premier élément, et des supports séparés (22) s'écartant dans des directions axiales opposées du premier élément le relie à ces deux masses.

9. Dispositif gyroscopique selon la revendication 1, dans lequel le premier élément est constitué de matière en forme de feuille ou laminaire présentant l'effet piézo-électrique.

10. Dispositif gyroscopique selon la revendication 1, dans lequel les seconds et troisièmes éléments sont montés par dépôt électrolytique sur le premier élément.

Fig. 1

Fig. 2

Fig. 3

Fig. 4

Fig. 5

Fig. 6

Fig. 7

Fig. 8

Fig. 9